# EUROPEAN PATENT APPLICATION

(11) **EP 2 838 213 A1**
(43) Date of publication of application: **18.02.2015**
(21) Application number: 14178624.4
(22) Date of filing: 25.07.2014
(51) Int. Cl.: H04B 17/00

(54) **Radio communication device and semiconductor integrated circuit**

(30) Priority: 16.08.2013 JP 2013169257
(71) Applicant: FUJITSU LIMITED, Kawasaki-shi, Kanagawa 211-8588 (JP)
(72) Inventor: Murakami, Yasuhiro, Kawasaki-shi, Kanagawa 211-8588 (JP); Takeuchi, Yasuaki, Kawasaki-shi, Kanagawa 211-8588 (JP); Tanii, Takashi, Kawasaki-shi, Kanagawa 211-8588 (JP); Hachiya, Nobuhide, Kawasaki-shi, Kanagawa 211-8588 (JP); Yamamori, Yusuke, Kawasaki-shi, Kanagawa 211-8588 (JP)
(74) Representative: Ward, James Norman

(57) **Abstract**

A radio communication device includes a semiconductor integrated circuit including a transmission path and a reception path; a determination unit that determines whether firmware used for processing in the semiconductor integrated circuit is updated; an input unit that inputs predetermined test data to the transmission path when it is determined that the firmware is updated; a measurement unit that measures a time until the test data returns from the reception path; and a processor that compares the measured time with a reference time, and adjusts a delay time of a signal based on a result of the comparison, wherein the semiconductor integrated circuit includes a bypass that connects the transmission path and the reception path to turn back the test data to the reception path at a stage prior to conversion of a frequency of the test data to the radio frequency.

## Description

### FIELD

The embodiments discussed herein are directed to a radio communication device and a semiconductor integrated circuit.

### BACKGROUND

In the standard of the Third Generation Partnership Project (3GPP) that is a standardization organization with respect to a radio communication system, a timing of transmitting signals from an antenna by a radio terminal device such as a mobile phone is specified. To be more specific, the timing is specified such that the radio terminal device transmits a signal when 266.7 microseconds (µs) corresponding to 1024 chips has passed since the radio terminal device receives a signal through the antenna.

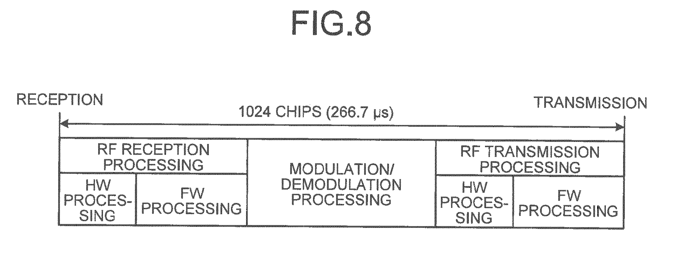

In general, a radio terminal device is provided with a first large scale integration (LSI) that assumes the role of conversion between a radio frequency (RF) and a baseband, and a second LSI that assumes the role of processing in the baseband. Therefore, in order that the transmission timing of the radio terminal device satisfies the standard, the transmission timing is adjusted such that the total time of processing in these two LSIs becomes 266.7 µs. To be more specific, as illustrated in FIG. 8, the transmission timing is adjusted such that the sum of the time of performing RF reception processing of reception signals in the first LSI, the time of performing the demodulation of the reception signals and the modulation of transmission data in the second LSI, and the time of performing RF transmission processing of the transmission data in the first LSI becomes 266.7 µs.

Here, in recent years, there has been the case that the first LSI that assumes the role of frequency conversion is also provided with a processor such as a central processing unit (CPU) or a micro processing unit (MPU). Accordingly, the RF reception processing and the RF transmission processing in the first LSI include processing by hardware (hereinafter, referred to as "HW processing") and processing by firmware (hereinafter, referred to as "FW processing").

The adjustment of transmission timing is, for example, performed by measuring a time from receiving the signals to transmit signals with the use of a measuring instrument connected to an antenna before the radio terminal device is shipped to the market. That is, the measuring instrument is connected to the antenna of the radio terminal device, signals are input from the measuring instrument and thereafter, a time to output signals from the antenna is measured. Furthermore, when the measured time is different from a time specified in the standard, a retention time of data in a buffer such as a First-In First-Out (FIFO) arranged in the inside of the radio terminal device is changed. As a result, the time from the reception of signals to the transmission of signals by the radio terminal device is changed thus adjusting the transmission timing as specified in the standard of the 3GPP.

Furthermore, it has been considered that without connecting a measuring instrument to a radio terminal device, the radio terminal device per se generates data for measurement and allows the data to pass through a transmission path and a reception path to measure a time from the reception of signals to the transmission of signals thus adjusting transmission timing, for example (see Japanese National Publication of International Patent Application No. 03-503352, and Japanese Laid-open Patent Publication No. 2007-282143).

As described above, in recent years, there has been the case that an LSI mounted on a radio terminal device and assuming the role of frequency conversion is provided with a processor to execute FW processing. Furthermore, firmware used for FW processing may be updated by upgrade or the like after the radio terminal device is shipped to the market. Accordingly, a time spent for the FW processing may vary in the LSI thus giving rise to a drawback that it is difficult to keep the transmission timing specified in the standard. That is, even when transmission timing is adjusted with the use of a measuring instrument before a radio terminal device is shipped to the market, change in a processing time in the radio terminal device after the radio terminal device is shipped to the market may cause change in the transmission timing compared with the condition before the radio terminal device is shipped to the market.

Furthermore, in order to keep transmission timing before a radio terminal device is shipped to the market, it is considered to avoid the change in a time for the FW processing by restricting the function of firmware. In this case, there is a drawback that there arises a certain limitation in improving the performance of the radio terminal device.

In this manner, it is difficult for a method of adjusting transmission timing by using a measuring instrument or the like before shipping a radio terminal device to the market to achieve transmission timing that satisfies the standard while improving the performance of the radio terminal device.

On the other hand, according to a method such that a radio terminal device per se generates data for measurement to adjust transmission timing, the transmission timing can be adjusted even after the radio terminal device is shipped to the market. However, in order to allow the data for measurement to pass through a transmission path and a reception path, a circuit or the like is newly provided to the radio terminal device so as to convert the frequency of the data for measurement, whose frequency is converted into a transmission frequency, into a reception frequency. Such a frequency conversion circuit is not used for a general radio communication thus giving rise to a drawback that the use of the frequency conversion circuit is inefficient in a cost or the like. Furthermore, the frequency conversion circuit is constituted such that the transmission path and the reception path are connected to each other to allow the data for measurement to pass therethrough and hence, due to a cause such as the leakage of transmission waves into the reception path during general radio communication, it is also conceivable that reception quality may deteriorate.

Accordingly, it is desirable to provide a radio communication device and a semiconductor integrated circuit in which transmission timing that satisfies the standard can be achieved effectively.

### SUMMARY

According to an aspect of an embodiment, a radio communication device includes a semiconductor integrated circuit including a transmission path that converts a frequency of a signal into a radio frequency from a baseband, and a reception path that converts a frequency of a signal into the baseband from the radio frequency; a determination unit that determines whether firmware used for processing in the semiconductor integrated circuit is updated; an input unit that inputs predetermined test data to the transmission path of the semiconductor integrated circuit when it is determined that the firmware is updated; a measurement unit that measures a time until the test data input by the input unit returns from the reception path of the semiconductor integrated circuit; and a processor that compares the time measured by the measurement unit with a reference time stored in advance, and adjusts a delay time of a signal based on a result of the comparison. The semiconductor integrated circuit includes a bypass that connects the transmission path and the reception path to turn back the test data input to the transmission path by the input unit to the reception path at a stage prior to conversion of a frequency of the test data to the radio frequency.

### BRIEF DESCRIPTION OF DRAWINGS

FIG. 1 is a block diagram illustrating a configuration of a radio terminal device according to one embodiment;
FIG. 2 is a block diagram illustrating an internal configuration of an LSI according to one embodiment;
FIG. 3 is a flowchart illustrating processing before the radio terminal device is shipped to the market according to one embodiment;
FIG. 4 is a flowchart illustrating an operation of the radio terminal device according to one embodiment.
FIG. 5 is a view illustrating a specific example of transmission timing adjustment according to one embodiment;
FIG. 6 is a view illustrating another example of the transmission timing adjustment according to one embodiment;
FIG. 7 is a view illustrating the other example of the transmission timing adjustment according to one embodiment; and
FIG. 8 is a view explaining transmission timing by the radio terminal device.

### DESCRIPTION OF EMBODIMENT

Preferred embodiments of the present invention will be explained with reference to accompanying drawings. Here, although the radio terminal device represented by a mobile phone is explained below as one example of the radio communication device, the present invention is not limited to this embodiment.

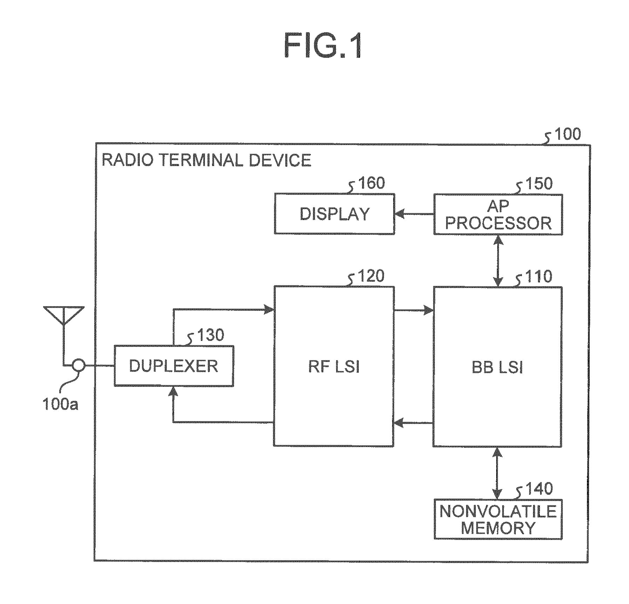

FIG. 1 is a block diagram illustrating a configuration of a radio terminal device 100 according to one embodiment. The radio terminal device 100 illustrated in FIG. 1 includes a baseband LSI (BB LSI) 110, a radio frequency LSI (RF LSI) 120, a duplexer 130, and a nonvolatile memory 140. Furthermore, the radio terminal device 100 includes an application processor (AP processor) 150 and a display 160. In addition, an antenna of the radio terminal device 100 is provided with a connector 100a that is connectable with a measuring instrument or the like.

The BB LSI 110 is a semiconductor integrated circuit that performs processing with respect to a baseband signal. To be more specific, the BB LSI 110 performs encoding, modulation, or the like of transmission data, and outputs the data to the RF LSI 120. Furthermore, the BB LSI 110 performs demodulation, decoding, or the like of a reception signal output from the RF LSI 120, and acquires reception data. In addition, the BB LSI 110 observes whether the version of firmware used by the RF LSI 120 is changed, and outputs test data to the RF LSI 120 when the version of the firmware is changed. The BB LSI 110 measures a time until the test data returns from the RF LSI 120, and notifies the RF LSI 120 of the measurement result.

The RF LSI 120 is a semiconductor integrated circuit that performs frequency conversion between a radio frequency (RF) and a baseband. To be more specific, the RF LSI 120 performs RF transmission processing including digital/analogue (DA) conversion of transmission data output from the BB LSI 110 and up-conversion of the data to a radio frequency. Furthermore, the RF LSI 120 performs RF reception processing including down-conversion of a reception signal received through the antenna to the baseband and analogue/digital (AD) conversion of the reception signal. The RF LSI 120 performs the HW processing by hardware and the FW processing by firmware in the processes of the RF transmission processing and the RF reception processing.

Furthermore, the RF LSI 120 includes a bypass that connects a transmission path through which a signal input from the BB LSI 110 and heading to the antenna passes, and a reception path through which a signal received by the antenna and heading to the BB LSI 110 passes. To be more specific, the RF LSI 120 includes the bypass that connects a portion of the transmission path through which a signal before frequency conversion passes, and a portion of the reception path through which a signal after frequency conversion passes. That is, in the RF LSI 120, the portions through which the baseband signal passes in the transmission path and the reception path are connected with each other. Furthermore, when test data is input from the BB LSI 110, the RF LSI 120 allows the test data to pass through the transmission path, the bypass, and the reception path at a baseband as it is without performing frequency conversion of the test data, and outputs the data to the BB LSI 110. Here, the internal configuration of each of the BB LSI 110 and the RF LSI 120 is specifically explained later.

The duplexer 130 is connected to the antenna to transmit data input from the RF LSI 120 through the antenna, and outputs a reception signal received by the antenna to the RF LSI 120. Furthermore, the duplexer 130 electrically separates between the path through which transmission data of a radio frequency that is transmitted from the antenna passes and the path through which a reception signal of the radio frequency that is received by the antenna passes.

The nonvolatile memory 140 is a nonvolatile storage device such as a flash memory. The nonvolatile memory 140 stores therein a reference time corresponding to appropriate transmission timing adjusted before the radio terminal device 100 is shipped to the market. That is, the nonvolatile memory 140 stores therein the reference time for test data to pass through the transmission path, the bypass, and the reception path in a state that the transmission timing of the radio terminal device 100 is adjusted as specified in the standard. When firmware used by the RF LSI 120 is, for example, downloaded, the nonvolatile memory 140 may store therein the data of the firmware.

The AP processor 150 outputs user data acquired by performing processing of an application to the BB LSI 110, and also performs processing of an application using reception data output from the BB LSI 110. Furthermore, when information is displayed as a result of performing processing of the application, the AP processor 150 generates display information and outputs the display information to the display 160.

The display 160 is a device provided with a liquid crystal panel or the like and capable of displaying information, and displays display information output from the AP processor 150.

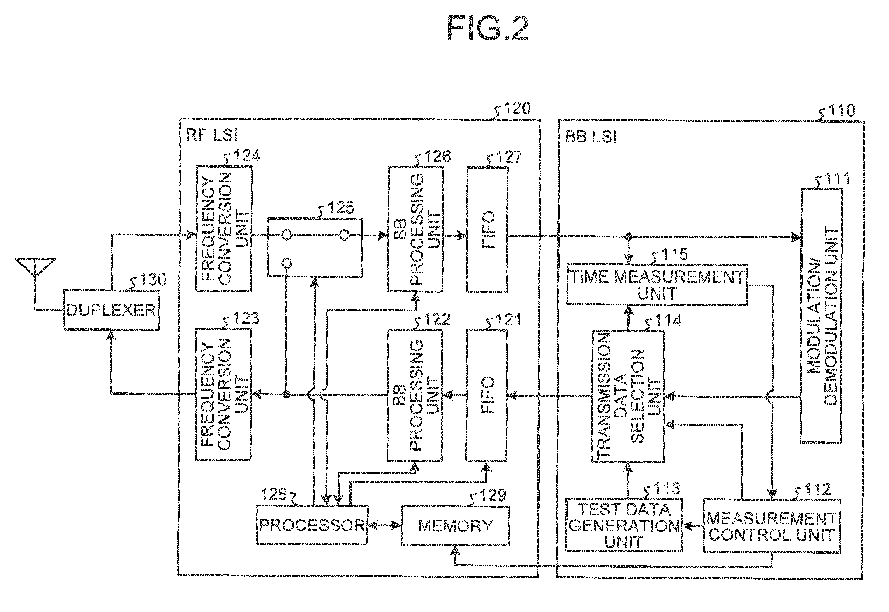

FIG. 2 is a block diagram illustrating the internal configurations of the BB LSI 110 and the RF LSI 120. The BB LSI 110 illustrated in FIG. 2 includes a modulation/demodulation unit 111, a measurement control unit 112, a test data generation unit 113, a transmission data selection unit 114, and a time measurement unit 115. Furthermore, the RF LSI 120 illustrated in FIG. 2 includes a First In First Out (FIFO) 121, a baseband processing unit (BB processing unit) 122, and a frequency conversion unit 123 in the signal transmission path thereof. Furthermore, the RF LSI 120 illustrated in FIG. 2 includes a frequency conversion unit 124, a switch 125, a BB processing unit 126, and an FIFO 127 in the signal reception path thereof. In addition, the RF LSI 120 includes a processor 128 and a memory 129.

The modulation/demodulation unit 111 encodes and modulates user data or the like that is output from the AP processor 150, and outputs the resulting data to the transmission data selection unit 114. Furthermore, the modulation/demodulation unit 111 demodulates and decodes the reception signal output from the RF LSI 120. The reception data acquired by demodulating and decoding in the modulation/demodulation unit 111 includes data for establishing synchronization with the other device communicating with the radio terminal device 100, data for updating the firmware used in the RF LSI 120, or the like.

The measurement control unit 112 observes whether the firmware used in the RF LSI 120 is updated when the radio terminal device 100 is, for example, started. When the firmware is updated, the measurement control unit 112 determines whether the version of the firmware is changed. Furthermore, the measurement control unit 112 reads, when the version of the firmware is changed, the reference time stored in the nonvolatile memory 140 to store the reference time in the memory 129 of the RF LSI 120. That is, the measurement control unit 112 reads a reference time for the test data to pass through the transmission path, the bypass, and the reception path in a state that transmission timing is adjusted as specified in the standard, and stores the reference time in the memory 129 of the RF LSI 120.

Furthermore, the measurement control unit 112 instructs, when the version of the firmware is changed, the test data generation unit 113 to generate test data and at the same time, instructs the transmission data selection unit 114 to select the test data as a transmission data. In addition, the measurement control unit 112 stores, when a result of measuring a time by using the test data is notified from the time measurement unit 115, the result in the memory 129 of the RF LSI 120.

The test data generation unit 113 generates, when instructed to generate test data from the measurement control unit 112, the test data having a predetermined pattern and outputs the test data to the transmission data selection unit 114.

The transmission data selection unit 114 selects either one of the user data output from the modulation/demodulation unit 111 and the test data output from the test data generation unit 113, and outputs the data selected to the RF LSI 120 as transmission data. To be more specific, the transmission data selection unit 114 selects the test data when instructed to select the test data as a transmission data from the measurement control unit 112, and selects the user data in normal communication or the like. Furthermore, the transmission data selection unit 114 instructs, when selecting the test data to output the data to the RF LSI 120, the time measurement unit 115 to start time measurement.

The time measurement unit 115 starts, when instructed to start time measurement from the transmission data selection unit 114, the time measurement and waits for the test data returning from the RF LSI 120. Furthermore, the time measurement unit 115 finishes, when detecting the return of the test data from the RF LSI 120, the time measurement and notifies the measurement control unit 112 of the measured time. That is, the time measurement unit 115 measures a time for the test data to pass through the transmission path, the bypass, and the reception path, and notifies the measurement control unit 112 of the measurement result.

On the other hand, the FIFO 121 of the RF LSI 120 is a first-in first-out buffer that stores therein the transmission data for a retention time set by the processor 128 when the transmission data output from the BB LSI 110 is input thereto. The FIFO 121 adjusts a retention time from a time when data is written therein to a time when the data is read out therefrom thus adjusting a delay time of a signal transmitted from the radio terminal device 100.

The BB processing unit 122 performs transmission processing such as D/A conversion with respect to transmission data output from the FIFO 121, and outputs the acquired transmission data in a baseband to the frequency conversion unit 123. In this case, the BB processing unit 122 performs both of the HW processing using hardware and the FW processing using firmware.

The frequency conversion unit 123 up-converts the frequency of the transmission data output from the BB processing unit 122 from a baseband to a radio transmission frequency, and outputs the resulting data to the duplexer 130.

The frequency conversion unit 124 down-converts the frequency of the reception signal output from the duplexer 130 from a radio reception frequency to the baseband.

The switch 125 switches paths in response to an instruction from the processor 128, and outputs the reception signal output from the frequency conversion unit 124 or the transmission data in the baseband that is output from the BB processing unit 122 to the BB processing unit 126. To be more specific, the switch 125 outputs, when the radio terminal device 100 is in normal communication, the reception signal output from the frequency conversion unit 124 to the BB processing unit 126. On the other hand, the switch 125 outputs, when the test data is output from the BB processing unit 122 as transmission data, the transmission data in a baseband that is output from the BB processing unit 122 to the BB processing unit 126.

Therefore, the switch 125 allows test data of a baseband as it is to pass through the bypass and hence, forms a path that bypasses the test data from the transmission path to the reception path to return the test data to the BB LSI 110. In this manner, the switch 125 bypasses the test data of the baseband before being up-converted by the frequency conversion unit 123 to the reception path, it is unnecessary to perform frequency conversion with respect to the test data. Furthermore, the bypass formed by the switch 125 is constituted such that test data of a baseband that is common in transmission and reception as it is turns back through the bypass thus suppressing a leak of a transmission wave to the reception path. This can prevent the deterioration of reception quality in the radio terminal device 100.

The BB processing unit 126 performs reception processing such as A/D conversion with respect to a reception signal or test data that are output from the switch 125, and outputs the acquired data in a baseband to the FIFO 127. In this case, the BB processing unit 126 performs both of the HW processing using hardware and the FW processing using firmware.

The FIFO 127 is a first-in first-out buffer that temporarily stores therein data in a baseband that is output from the BB processing unit 126. The FIFO 127 stores the data therein, and outputs the data to the BB LSI 110 after a lapse of the predetermined retention time.

The processor 128 instructs, when test data is output as transmission data from the BB LSI 110, the switch 125 to form the bypass between the transmission path and the reception path. That is, the processor 128 instructs, when the test data is selected by and output from the transmission data selection unit 114 of the BB LSI 110, the switch 125 to form the bypass that connects the BB processing unit 122 and the BB processing unit 126.

Furthermore, the processor 128 compares the reference time stored in the memory 129 with a time measured by using the test data and adjusts, when the reference time and the measured time are different from each other, the retention time of the transmission data in the FIFO 121 depending on the amount of the difference between the reference time and the measured time. To be more specific, the processor 128 reduces, when the time measured by using the test data is longer than the reference time, the retention time in the FIFO 121 by the amount of the difference between the measured time and the reference time. Furthermore, the processor 128 increases, when the time measured by using the test data is shorter than the reference time, the retention time in the FIFO 121 by the amount of the difference between the reference time and the measured time.

The memory 129 is a storage medium such as a random access memory (RAM), which temporarily stores therein data or the like used by the processor 128. The memory 129 stores temporarily therein the reference time acquired by the measurement control unit 112 of the BB LSI 110, a time measured by using test data, or the like.

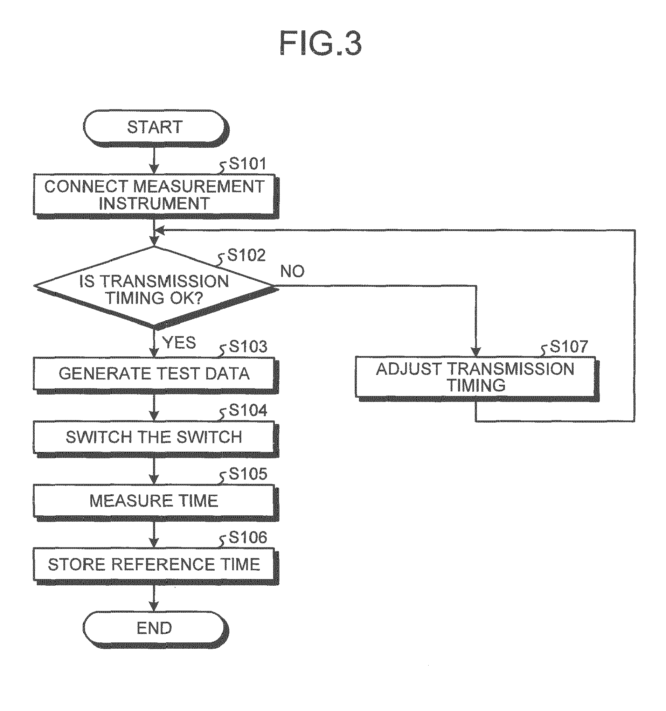

Next, the operation of the radio terminal device 100 constituted as described above is explained. FIG. 3 is a flowchart illustrating processing before the radio terminal device 100 is shipped to the market in the present embodiment. In the present embodiment, before the radio terminal device 100 is shipped to the market, transmission timing is, for example, adjusted manually and optimally by using a measuring instrument or the like. Furthermore, time measurement using test data is performed in a state that transmission timing is optimally adjusted, and the result of the time measurement is stored as a reference time.

To be more specific, a measuring instrument is connected to the connector 100a provided to the antenna of the radio terminal device 100 (Step S101). Furthermore, a predetermined signal corresponding to a reception signal is input to the radio terminal device 100 from the measuring instrument and thereafter, a time until a transmission signal arrives at the connector 100a is measured by the measuring instrument. The time measured by the measuring instrument corresponds to a time until the radio terminal device 100 transmits a signal after receiving the signal. Based on the measured time, it is determined whether the transmission timing of the radio terminal device 100 satisfies the standard (Step S102).

As a result of the determination, when the transmission timing does not satisfy the standard (No at Step S102), for example, through an adjustment or the like of the retention time of data in the FIFO 121 or the FIFO 127, the transmission timing of the radio terminal device 100 is adjusted (Step S107). Furthermore, the transmission timing is measured by the measuring instrument again, and the transmission timing is adjusted until the transmission timing becomes optimal so as to satisfy the standard.

Furthermore, when the transmission timing satisfies the standard (Yes at Step S102), through predetermined operations or the like, the measurement control unit 112 instructs the test data generation unit 113 to generate test data. Upon receiving the instruction, the test data generation unit 113 generates the test data (Step S103), and outputs the test data to the RF LSI 120 via the transmission data selection unit 114. Here, the test data is output from the transmission data selection unit 114 and at the same time, the time measurement unit 115 starts time measurement.

Furthermore, when test data is generated and time measurement is performed, the switch 125 is switched by the processor 128 (Step S104), and the transmission path and the reception path of the RF LSI 120 are connected with the bypass. That is, the switch 125 is switched and hence, the BB processing unit 122 on the transmission path and the BB processing unit 126 on the reception path are connected with each other.

Furthermore, the test data output from the transmission data selection unit 114 passes through the transmission path having the FIFO 121 and the BB processing unit 122, the bypass formed by switching the switch 125, and the reception path having the BB processing unit 126 and the FIFO 127. A time for the test data to pass through such paths is measured by the time measurement unit 115 of the BB LSI 110 (Step S105). As described above, at this point of time, the retention time of data in the FIFO 121 and the FIFO 127 is adjusted, and the transmission timing of the radio terminal device 100 satisfies the standard and hence, the time measured by the time measurement unit 115 is a time corresponding to the optimal transmission timing. The time measured by the time measurement unit 115 is stored in the nonvolatile memory 140 as a reference time through the measurement control unit 112 (Step S106).

In this manner, in the present embodiment, before being shipped to the market, the radio terminal device 100 stores therein a time for test data to pass through the transmission path, the bypass, and the reception path as a reference time in a state that transmission timing is optimally adjusted so as to satisfy the standard. Accordingly, even when the processing time of the FW processing changes after the radio terminal device 100 is shipped to the market, a time measured by using the test data is compared with the reference time thus adjusting the transmission timing.

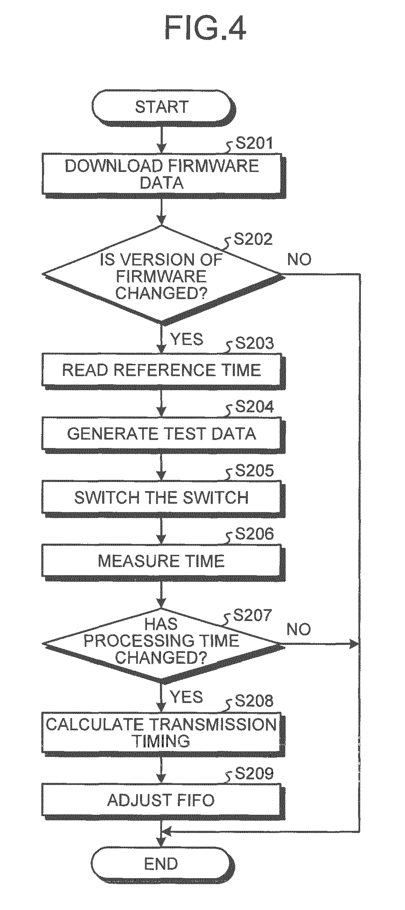

Next, in the present embodiment, processing after the radio terminal device 100 is shipped to the market is explained. FIG. 4 is a flowchart illustrating the operation of the radio terminal device 100 according to the present embodiment.

After the radio terminal device 100 is shipped to the market, firmware used for the FW processing in the BB processing unit 122 or the BB processing unit 126 of the RF LSI 120 may be updated. In such a case, data of the firmware is downloaded to the radio terminal device 100 by radio communication (Step S201), and stored in the nonvolatile memory 140. The data of the firmware is loaded in the memory 129 when the radio terminal device 100 is started, and the firmware is updated. This causes change in a processing time for the FW processing of the BB processing unit 122 or the BB processing unit 126, which may change transmission timing of the radio terminal device 100. That is, the transmission timing of the radio terminal device 100 that has been optimally adjusted so as to satisfy the standard before being shipped to the market is changed, and may differ from the transmission timing specified in the standard.

The radio terminal device 100 according to the present embodiment adjusts transmission timing based on a time measured by using test data. To be more specific, at power-on of the radio terminal device 100, for example, the measurement control unit 112 refers to data of firmware to determine whether the version of the firmware is changed (Step S202). As a result of the determination, when the version of the firmware is not changed (No at Step S202), the transmission timing has no change due to updating of the firmware and hence, the processing is completed without adjusting the transmission timing.

On the other hand, when the version of the firmware is changed (Yes at Step S202), the reference time is read out from the nonvolatile memory 140 by the measurement control unit 112 (Step S203), and stored in the memory 129. Furthermore, in response to the instruction given from the measurement control unit 112 the test data generation unit 113 generates test data (Step S204), and the transmission data selection unit 114 selects the test data as transmission data.

Concurrently with these processes, in the RF LSI 120, the switch 125 is switched by the processor 128 (Step S205) and hence, the transmission path, the bypass, and the reception path are connected with each other. That is, the switch 125 is switched and hence, the BB processing unit 122 on the transmission path and the BB processing unit 126 on the reception path are connected with each other via the bypass.

Furthermore, the transmission data selection unit 114 outputs the test data and, at the same time, the time measurement unit 115 starts time measurement to measure a time until the test data passes through the transmission path, the bypass, and the reception path and returns to the BB LSI 110 (Step S206). Here, the bypass connects a portion anterior to the frequency conversion unit 123 of the transmission path and a portion posterior to the frequency conversion unit 124 of the reception path and hence, the test data of a baseband as it is turns back through the bypass. That is, the output position of the BB processing unit 122 on the transmission path and the input position of the BB processing unit 126 on the reception path are connected with the bypass and hence, it is unnecessary to perform frequency conversion with respect to the test data. Therefore, it is unnecessary to add another component such as a dedicated frequency conversion circuit for the time measurement using the test data thus suppressing the increase of a device size.

The result of measurement by the time measurement unit 115 is notified to the measurement control unit 112, and stored in the memory 129 by the measurement control unit 112. Since the test data passes through the same paths as the case that the reference time is measured before the radio terminal device 100 is shipped to the market, the result of measurement is compared with the reference time, thus enabling determination of whether the transmission timing is changed before and after updating the firmware. The reference time and the result of measurement using the test data are read out from the memory 129 by the processor 128 and compared with each other thus determining whether the FW processing time in the BB processing unit 122 or the BB processing unit 126 has changed (Step S207). As a result of the determination, when the FW processing time has no change (No at Step S207), the transmission timing has no change due to updating of the firmware and hence, the processing is completed without adjusting the transmission timing.

On the other hand, when the FW processing time has changed (Yes at Step S207), the difference between the reference time and the result of measurement using the test data is calculated by the processor 128 and hence, a deviation of the transmission timing due to the update of the firmware is calculated (Step S208). The processor 128 adjusts such that the retention time of data in the FIFO 121 or the FIFO 127 is changed by the amount of the deviation of the transmission timing (Step S209). To be more specific, when the measured time using the test data is longer than the reference time, the retention time of the data in the FIFO 121 or the FIFO 127 is reduced by the amount of the difference therebetween. In contrast, when the measured time using the test data is shorter than the reference time, the retention time of the data in the FIFO 121 or the FIFO 127 is increased by the amount of the difference therebetween.

As a result, even when the firmware in the RF LSI 120 is updated and the processing time has changed, a delay time of a signal in the FIFO 121 or the FIFO 127 is adjusted, and the total time in which the signal passes through the RF LSI 120 becomes equivalent to that before the firmware is updated. That is, even when the firmware is updated, the transmission timing of the radio terminal device 100 is maintained by the adjustment. Furthermore, in order to adjust the transmission timing in this manner, in the present embodiment, the test data of a baseband as it is turns back in the RF LSI 120. Accordingly, another component such as a dedicated frequency conversion circuit only for the test data is unnecessary and, at the same time, in normal operation, the transmission wave up-converted to a radio transmission frequency does not leak into the reception path, and deterioration in reception quality does not occur. Therefore, even after the radio terminal device 100 is shipped to the market, the transmission timing that satisfies the standard is efficiently achievable.

Here, in order to adjust transmission timing, a retention time of data in the FIFO 121 or the FIFO 127 is changed, and various methods for changing the retention time are conceivable. Hereinafter, a method for adjusting transmission timing is specifically explained in conjunction with examples.

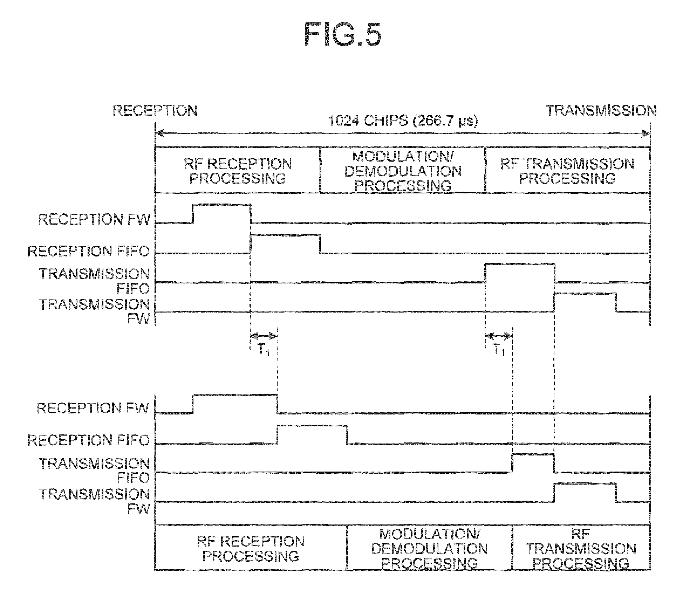

FIG. 5 is a view illustrating a first specific example of transmission timing adjustment according to the present embodiment. In FIG. 5, the upper half illustrates a processing time in the RF LSI 120 and the BB LSI 110 before updating firmware, and the lower half illustrates a processing time in the RF LSI 120 and the BB LSI 110 after updating the firmware.

In the standard of the 3GPP, a time until the radio terminal device 100 transmits a signal after receiving a signal is specified as 266.7 µs corresponding to 1024 chips. Therefore, in a state that transmission timing is appropriately adjusted before the radio terminal device 100 is shipped to the market, the total time of a time for RF reception processing in the RF LSI 120, a time for demodulating processing and modulation processing in the BB LSI 110, and a time for RF transmission processing in the RF LSI 120 is set to 266.7 µs.

Here, the time for the RF reception processing includes a time for the HW processing and the FW processing in the BB processing unit 126 and a time during which data is stored in the FIFO 127. In FIG. 5, a time during which "RECEPTION FW" is high indicates a time for the FW processing in the BB processing unit 126, and a time during which "RECEPTION FIFO" is high indicates the time during which the data is stored in the FIFO 127.

Furthermore, the time for the RF transmission processing includes a time during which data is stored in the FIFO 121 and a time for the HW processing and the FW processing in the BB processing unit 122. In FIG. 5, a time during which "TRANSMISSION FIFO" is high indicates the time during which data is stored in the FIFO 121, and a time during which "TRANSMISSION FW" is high indicates a time for the FW processing in the BB processing unit 122.

Here, the following case is considered; that is, after the radio terminal device 100 whose transmission timing is adjusted so as to be in a state illustrated in the upper half in FIG. 5 is shipped to the market, the firmware in the BB processing unit 126 is updated, and the FW processing time increases. That is, a case that the FW processing time in the BB processing unit 126 on the reception path increases and, as illustrated in the lower half in FIG. 5, a time during which "RECEPTION FW" is high increases by T₁ is considered.

In this case, by comparing a result of measuring a time using the test data mentioned above with the reference time, the processor 128 determines that the deviation of transmission timing is T₁ by calculation. The processor 128 reduces the retention time of the data in the FIFO 121 on the transmission path by T₁. As a result, after the firmware is updated, as illustrated in the lower half of FIG. 5, although the time for the RF reception processing is increased by T₁, the time for the RF transmission processing is reduced by T₁. Therefore, the total time of the time for the RF reception processing, the time for the modulation/demodulation processing, and the time for the RF transmission processing remains 266.7 µs even after the firmware is updated thus keeping the transmission timing specified in the standard of the 3GPP.

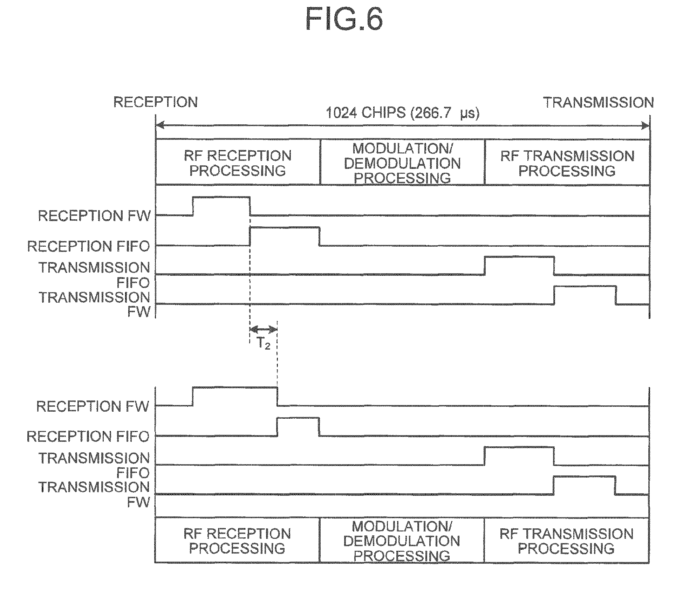

FIG. 6 is a view illustrating a second specific example of transmission timing adjustment according to the present embodiment. In FIG. 6, the upper half illustrates a processing time in the RF LSI 120 and the BB LSI 110 before firmware is updated, and the lower half illustrates a processing time in the RF LSI 120 and the BB LSI 110 after the firmware is updated. In FIG. 6 also, in the same manner as the case of FIG. 5, a time during which "RECEPTION FW" is high indicates a time for the FW processing in the BB processing unit 126, and a time during which "RECEPTION FIFO" is high indicates a time during which data is stored in the FIFO 127. A time during which "TRANSMISSION FIFO" is high indicates the time during which the data is stored in the FIFO 121, and a time during which "TRANSMISSION FW" is high indicates a time for the FW processing in the BB processing unit 122.

Here, the following case is considered; that is, after the radio terminal device 100 whose transmission timing is adjusted so as to be in a state illustrated in the upper half in FIG. 6 is shipped to the market, the firmware in the BB processing unit 126 is updated, and the FW processing time increases. That is, the case that the time for the FW processing in the BB processing unit 126 on the reception path increases and, as illustrated in the lower half in FIG. 6, a time during which "RECEPTION FW" is high increases by T₂ is considered.

In this case, by comparing a result of measuring a time using the test data mentioned above with the reference time, the processor 128 determines that the deviation of transmission timing is T₂ by calculation. The processor 128 reduces the retention time of the data in the FIFO 127 on the reception path by T₂. As a result, after the firmware is updated, as illustrated in the lower half of FIG. 6, although the time for the FW processing is increased and the retention time of the data in the FIFO is reduced, the overall time does not change. Therefore, the total time of the time for the RF reception processing, the time for the modulation/demodulation processing, and the time for the RF transmission processing remains 266.7 µs even after the firmware is updated thus keeping the transmission timing specified in the standard of the 3GPP.

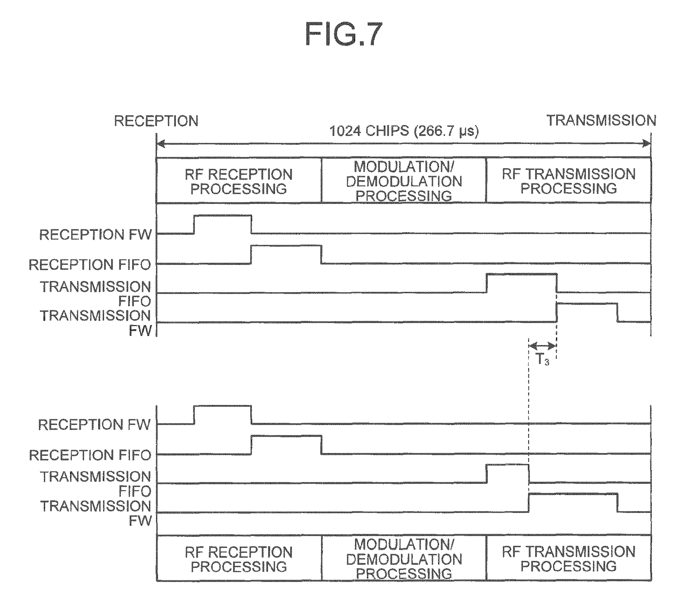

FIG. 7 is a view illustrating a third specific example of transmission timing adjustment according to the present embodiment. In FIG. 7, the upper half illustrates a processing time in the RF LSI 120 and the BB LSI 110 before firmware is updated, and the lower half illustrates a processing time in the RF LSI 120 and the BB LSI 110 after the firmware is updated. In FIG. 7 also, in the same manner as the case of FIG. 5, the time during which "RECEPTION FW" is high indicates a time for the FW processing in the BB processing unit 126, and the time during which "RECEPTION FIFO" is high indicates a time during which data is stored in the FIFO 127. Furthermore, the time during which "TRANSMISSION FIFO" is high indicates a time during which the data is stored in the FIFO 121, and the time during which "TRANSMISSION FW" is high indicates a time for the FW processing in the BB processing unit 122.

Here, the following case is considered; that is, after the radio terminal device 100 whose transmission timing is adjusted so as to be in a state illustrated in the upper half of FIG. 7 is shipped to the market, the firmware in the BB processing unit 122 is updated, and the FW processing time increases. That is, the case that a time for the FW processing in the BB processing unit 122 on the transmission path increases and, as illustrated in the lower half of FIG. 7, the time during which "TRANSMISSION FW" is high increases by T₃ is considered.

In this case, by comparing a result of measuring a time using the test data mentioned above with the reference time, the processor 128 determines that the deviation of transmission timing is T₃ by calculation. Accordingly, the processor 128 reduces the retention time of the data in the FIFO 121 on the transmission path by T₃. As a result, after the firmware is updated, as illustrated in the lower half of FIG. 7, although, in the RF transmission processing, the time for the FW processing is increased and the retention time of the data in the FIFO is reduced, the overall time does not change. Therefore, the total time of the time for the RF reception processing, the time for the modulation/demodulation processing, and the time for the RF transmission processing remains 266.7 µs even after the firmware is updated thus keeping the transmission timing specified in the standard of the 3GPP.

In this manner, when the FW processing time has changed by the update of firmware, the retention time of data in the FIFO 121 on the transmission path or the FIFO 127 on the reception path is adjusted thus maintaining transmission timing before the firmware is updated. Here, not the retention time of data in either one of the FIFO 121 and the FIFO 127 but the retention time of data in both of the FIFO 121 and the FIFO 127 may be changed thus maintaining the transmission timing as a matter of course. Furthermore, not the retention time of data in the FIFO 121 or the FIFO 127 but the retention time of data in a buffer that is provided in the BB LSI 110 and not illustrated in the drawings may be changed thus also adjusting the transmission timing.

As mentioned above, according to the present embodiment, when portions of the transmission path and the reception path through which a signal in a baseband passes are connected with the bypass and when firmware is updated, a time for test data to pass through the transmission path, the bypass, and the reception path is measured. Furthermore, the result of measurement is compared with a reference time stored in advance to calculate the deviation of transmission timing due to the update of firmware, and the retention time of data in the FIFO is changed by the amount of the deviation calculated. Accordingly, a dedicated frequency conversion circuit or the like only for test data becomes unnecessary for a radio terminal device thus adjusting the transmission timing while suppressing the increase of a device size. This means that the transmission timing that satisfies the standard for the radio terminal device is efficiently achievable.

Here, in one embodiment mentioned above, the processor 128 mounted on the RF LSI 120 sets a retention time of data in the FIFO 121, or instructs to switch the switch 125. However, the processor 128 does not necessarily perform these settings or instructions. For example, another constitution can be adopted in which the measurement control unit 112 of the BB LSI 110, another processor (not illustrated), or the like performs the settings or instructions.

Furthermore, in one embodiment mentioned above, although the switch 125 is on the reception path, such a switch may be on the transmission path. In this case, the switch on the transmission path outputs, when the radio terminal device 100 is in normal communication, transmission data output from the BB processing unit 122 to the frequency conversion unit 123. Furthermore, the switch outputs, when test data is output from the BB processing unit 122 as transmission data, the transmission data in a baseband that is output from the BB processing unit 122 to the BB processing unit 126 in the reception path.

In addition, the operation of the radio terminal device 100 explained in one embodiment mentioned above can also be described as a computer-executable program. In this case, the program can also be stored in a computer-readable recording medium to install the program into the computer. As a computer-readable recording medium, a portable recording medium such as a CD-ROM, a DVD disk, or a USB memory, and a semiconductor memory such as a flash memory may be listed.

According to one aspect of the radio communication device and the semiconductor integrated circuit that are disclosed in the present application, an effect of achieving the transmission timing that satisfies the standard is efficiently attainable.

## Claims

1. A radio communication device (100) comprising:
a semiconductor integrated circuit (120) including
a transmission path that converts a frequency of a signal into a radio frequency from a baseband, and
a reception path that converts a frequency of a signal into the baseband from the radio frequency;
a determination unit (112) that determines whether firmware used for processing in the semiconductor integrated circuit (120) is updated;
an input unit (114) that inputs predetermined test data to the transmission path of the semiconductor integrated circuit (120) when it is determined that the firmware is updated;
a measurement unit (115) that measures a time until the test data input by the input unit (114) returns from the reception path of the semiconductor integrated circuit (120); and
a processor (128) that compares the time measured by the measurement unit (115) with a reference time stored in advance, and adjusts a delay time of a signal based on a result of the comparison, wherein
the semiconductor integrated circuit (120) includes a bypass that connects the transmission path and the reception path to turn back the test data input to the transmission path by the input unit to the reception path at a stage prior to conversion of a frequency of the test data to the radio frequency.

2. The radio communication device (100) according to claim 1, wherein
the input unit (114) inputs the test data to the semiconductor integrated circuit (120) when a relation between a timing at which a signal that passes through the reception path is received, and a timing at which a signal that passes through the transmission path is transmitted satisfies a predetermined standard,
the measurement unit (115) stores the time measured in a storage unit (129) when the predetermined standard is satisfied, and
the processor (128) uses the time stored in the storage unit (129) as the reference time.

3. The radio communication device (100) according to claim 1 or 2, further comprising:
an antenna, wherein
the semiconductor integrated circuit (120) further includes a switch (125) that switches between a state that the bypass is connected with the reception path and a state that the antenna is connected with the reception path.

4. The radio communication device (100) according to any of claims 1 to 3, wherein the processor adjusts a retention time of a signal in a buffer (121) on the transmission path based on the result of the comparison.

5. The radio communication device (100) according to any of claims 1 to 4, wherein the processor adjusts a retention time of a signal in a buffer (127) on the reception path based on the result of the comparison.

6. The radio communication device (100) according to any of claims 1 to 5, wherein the processor (128) changes the delay time of the signal by an amount of a difference between the time measured by the measurement unit (115) and the reference time.

7. A semiconductor integrated circuit (120) comprising:
a transmission path that outputs a signal input from another semiconductor integrated circuit (110) to an antenna;
a first frequency conversion unit (123) that is on the transmission path and converts a frequency of a signal passing through the transmission path from a baseband to a radio frequency;
a reception path that outputs a signal input from the antenna to the other semiconductor integrated circuit (110);
a second frequency conversion unit (124) that is on the reception path and converts a frequency of a signal passing through the reception path from the radio frequency to the baseband;
a bypass that connects the transmission path and the reception path to turn back predetermined test data from a stage anterior to the first frequency conversion unit (123) to a stage posterior to the second frequency conversion unit (124), the predetermined test data being input to the transmission path from the other semiconductor integrated circuit (110); and
a processor (128) that compares a time for the test data to pass through the transmission path, the bypass, and the reception path with a reference time stored in advance, and adjusts a delay time of a signal based on a result of the comparison.

8. A transmission timing adjustment program causing a computer to execute a process comprising:
determining whether a firmware is updated, the firmware being used for processing in a semiconductor integrated circuit (120) including a transmission path that converts a frequency of a signal into a radio frequency from a baseband, and a reception path that converts a frequency of a signal into the baseband from the radio frequency;
inputting predetermined test data to the transmission path of the semiconductor integrated circuit (120) when it is determined that the firmware is updated;
measuring a time until the test data input returns from the reception path of the semiconductor integrated circuit (120) through a process that turns back the test data to the reception path from the transmission path at a stage prior to conversion of a frequency of the test data to the radio frequency; and
comparing the time measured at the measuring with a reference time stored in advance and adjusting a delay time of a signal based on a result of the comparison.

9. A computer-readable storage medium storing therein a transmission timing adjustment program as defined in claim 8.

10. A transmission timing adjustment method comprising:
determining whether a firmware is updated, the firmware being used for processing in a semiconductor integrated circuit (120) including a transmission path that converts a frequency of a signal into a radio frequency from a baseband, and a reception path that converts a frequency of a signal into the baseband from the radio frequency;
inputting predetermined test data to the transmission path of the semiconductor integrated circuit (120) when it is determined that the firmware is updated;
measuring a time until the test data input returns from the reception path of the semiconductor integrated circuit (120) through a process that turns back the test data to the reception path from the transmission path at a stage prior to conversion of a frequency of the test data to the radio frequency; and
comparing the time measured at the measuring with a reference time stored in advance and adjusting a delay time of a signal based on a result of the comparison.
